# NEW EUROPEAN PATENT SPECIFICATION

(11) **EP 2 221 098 B2**
(45) Date of publication and mention of the opposition decision: **18.03.2015**
(45) Mention of the grant of the patent: 06.07.2011
(21) Application number: 10250030.3
(22) Date of filing: 08.01.2010
(51) Int. Cl.: B01D 46/24

(54) **Honeycomb structure**
Wabenstruktur
Structure en nid d'abeille

(30) Priority: 16.02.2009 JP 2009032951
(43) Date of publication of application: 25.08.2010
(73) Proprietor: NGK Insulators, Ltd., Aichi Pref. 467-8530 (JP)
(72) Inventor: Yamaguchi, Shinji, Nagoya City Aichi-ken 467-8530 (JP)
(74) Representative: Naylor, Matthew John

(56) References cited:
- EP-A1- 0 121 175
- EP-A1- 0 245 738
- EP-A1- 1 031 376
- EP-A1- 1 837 063
- EP-A2- 0 900 922
- EP-A2- 1 726 795
- EP-A2- 1 930 058
- WO-A1-90/12950
- WO-A1-99/24700
- WO-A2-02/46093
- DE-A1- 2 905 241
- DE-A1- 3 638 082
- DE-A1-102005 019 672
- JP-B2- 3 816 341
- US-A- 5 633 066
- US-B1- 6 548 142

## Description

### Background of the Invention

### Field of the Invention

The present invention relates to a honeycomb structure having displacement of cells in a fluid flow direction.

### Description of the Related Art

In order to try to improve environment by inhibiting pollution, a filter or a catalyst is applied to an exhaust gas treatment. As the filter itself or the catalyst carrier for the exhaust gas treatment, there is heavily used a circular columnar honeycomb structure where a plurality of cells separated by porous partition walls are formed in parallel between two end faces. For example, in order to trap and remove particulate matter (PM: detected as three components of organic solvent soluble component, soot, and sulfate) contained in exhaust gas from a diesel engine or the like, a diesel particulate filter (DPF) is incorporated into an exhaust system or the like of a diesel engine for use, and a honeycomb structure is used in the DPF.

When a honeycomb structure is used as a DPF, temperature rise easily concentrates in the same position upon trapping and removing PM (upon use) and upon combusting and removing the PM (upon regeneration) deposited inside the filter in order to eliminate increase in pressure loss by the PM deposited inside the filter with the passage of time, and attention should be paid to the point that a defect such as a crack may be caused due to thermal stress. Recently, because of increase in size of the DPF, thermal stress generating upon use and upon regeneration is remarkably increasing in comparison with a conventional one, and frequency and degree of occurrence of a defect based on the thermal stress are getting more serious. In particular, when the length (length of a honeycomb structure in the fluid flow direction) of the DPF is 150 mm or more, heat concentrates on the exhaust gas outlet side to easily cause super temperature rise, and, when the length is 250 mm or more, it becomes worse.

On the other hand, there has been proposed a honeycomb structure having a structure where a plurality of honeycomb segments are unitarily bonded at a bonding face of each of them by means of a bonding material layer. In such a honeycomb structure, since the bonding material layer functions as a cushion material for suppressing thermal expansion, the thermal stress is reduced. In addition, by employing the segment structure, the distance between a position having high temperature and a position having low temperature becomes short, and temperature gradient is small. Therefore, a honeycomb structure having a segment structure has the excellent characteristic of hardly causing a defect such as a crack and is applied to a DPF made of SiC, which has relatively large thermal expansion coefficient. Incidentally, the prior art documents are JP-A-2005-315141, JP-A-2003-024726, Japanese Patent No. 3816341, and Registered Utility Model No. 2577961.

### Summary of the Invention

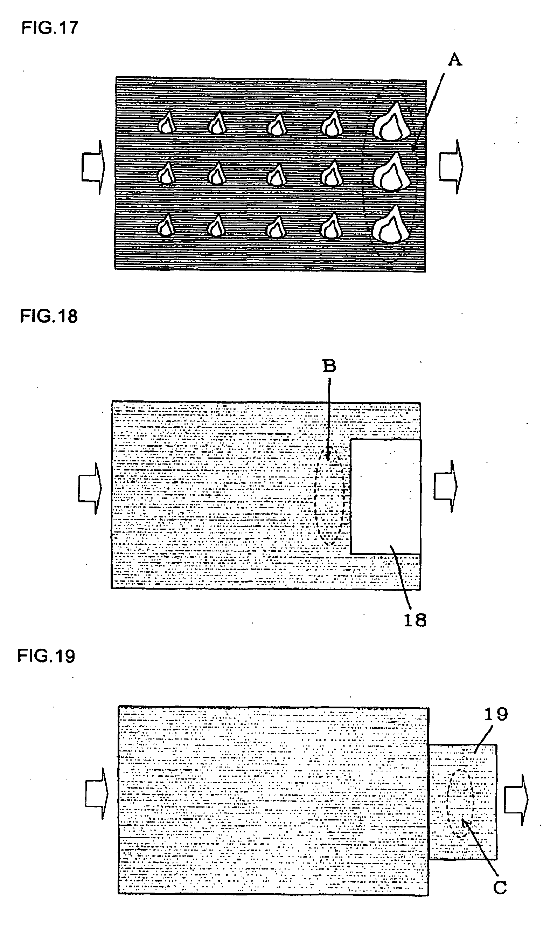

However, even a honeycomb structure having a segment structure sometimes causes thermal shock fracture or melting of partition walls when it is used as a DPF. The thermal shock fracture or melting of partition walls is considered to be caused because temperature easily rises more on the exhaust gas outlet side (A portion in Fig . 17) in comparison with the exhaust gas inlet side by heat generating anteriorly together with PM combustion heat added thereto since the trapped PM is combusted in order from the exhaust gas (fluid) inlet side upon regeneration. In particular, it is speculated that escape of heat in a diametral direction in a DPF having a flat end face on the outlet side is not good (see Fig. 17). Incidentally, in Fig. 17, the reversely printed arrows show an exhaust gas flow (Hereinbelow, the same is applied in all the drawings having a reversely printed arrow). In addition, the pattern appearing in the cross section of Fig. 17 shows images of flames and expresses that temperature easily rises on the exhaust gas outlet side in comparison with the inlet side by increasing the size of the images of flames on the outlet side.

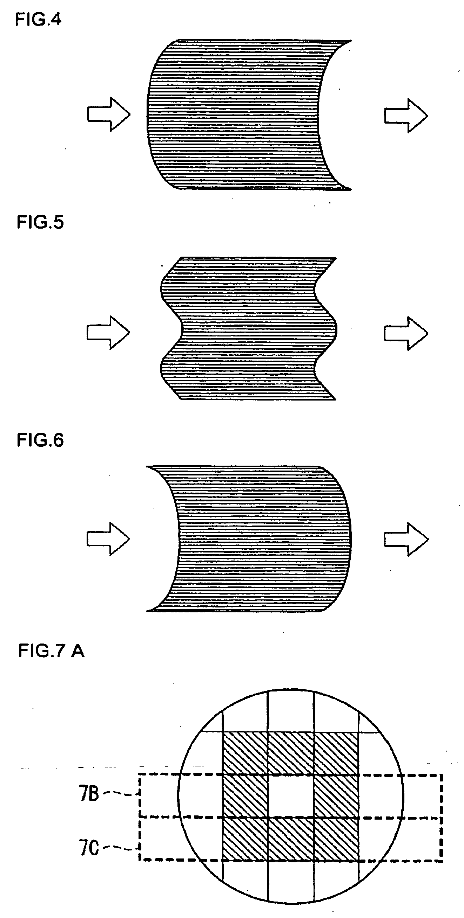

In contrast, there can be considered a structure where a depression (concave portion 18) is provided from the end face in a central portion in a diametral direction in a circular columnar DPF, that is, a portion in the vicinity of the central axis of the DPF (see Fig. 18 and see Fig. 4 of JP-A-2003-024726) to remove a portion easily having high temperature. Also, in this case, pressure loss in the central portion in a diametral direction decreases, and more gas flows there in comparison with the outer peripheral portion, and therefore the PM deposition amount increases there. Therefore, the central portion (B portion in Fig. 18) in the exhaust gas outlet side easily has super temperature rise. In addition, when the entire length of the cells is changed, more gas flows in the portion having low pressure loss, and the catalyst in the cells where gas hardly flows does not function effectively, and exhaust gas purification performance is deteriorated.

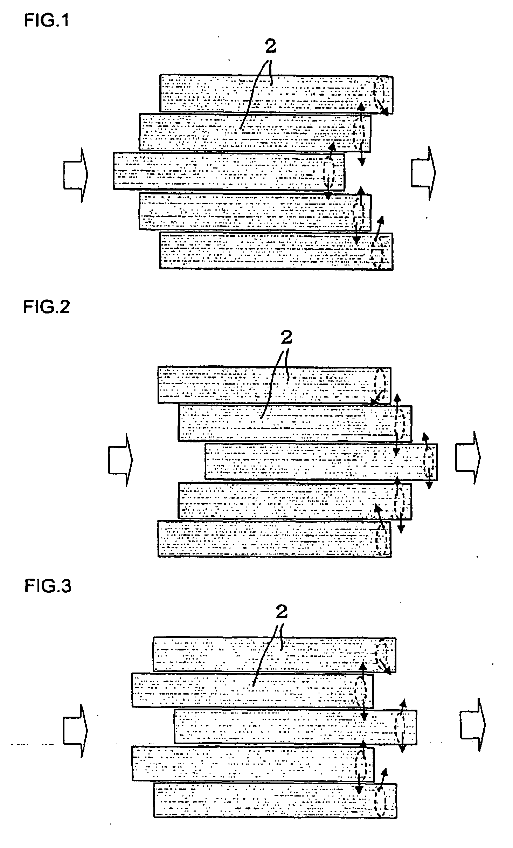

In addition, when a protrusion (convex portion 19) is provided from the end face in the central portion in the diametral direction of a cylindrical columnar DPF (see Fig. 19, see Fig. 3 of JP-A-2003-024726, and see Fig. 2 of JP-A-2005-315141), the PM deposition region in the central portion becomes long, and the amount of heat sent from anterior upon regeneration increases. Therefore, the central portion on the exhaust gas outlet side (C portion in Fig. 19) easily has super temperature rise.

The present invention has been made in view of such problems of the prior art and aims to provide a honeycomb structure useful as a filter for exhaust gas or a catalyst carrier, in particular, as a DPF for trapping PM and the like in exhaust gas from a diesel engine and hardly having super temperature rise upon use or upon regeneration, thereby hardly causing thermal shock fracture or melting of partition walls.

As a result of further investigation, it was found out that the aforementioned problems can be solved by a honeycomb structure where a plurality of the cells have the same overall length in the fluid flow direction and mutually have displacement in the fluid flow direction to have unevenness on the end faces as a result. When such a honeycomb structure has a segment structure, the honeycomb structure can easily be realized by displacing (honeycomb) segments in the fluid flow direction. Even the honeycomb structure not having a segment structure can be realized by providing unevenness with mutually complementing the end faces on the inlet and outlet sides so that the entire lengths of the cells are the same. That is, in this form, if a concave portion is present on one end face, a convex portion having the same shape as the shape of the space of the concave portion is present on the other end face.

That is, according to the present invention, there is provided a honeycomb structure as set out in claim 1.

The cell is a narrow and long small space functioning as a fluid (exhaust gas or the like) passage. Since the entire lengths of the cells are almost the same, the partition wall surface areas (filter areas) of the cells are also the same. When the end face is oblique, the entire lengths of the cells are sometimes different depending on the portion. In this case, the average value is employed. In a plugged honeycomb structure described later, in the case that the plugging (materials) have different lengths, the same entire length of the cells means that the entire lengths of the cells excluding the plugging (materials) are the same.

The fluid flow direction means the direction of the main flow. This corresponds to the flow direction of the fluid flowing through the cells. In the plugged honeycomb structure described later, when the fluid passes through partition walls, the fluid once flows in the direction different from the flow direction of the fluid flowing through the cells. The fluid flow direction does not mean this direction. Since the fluid uses cells as fluid passages and flows through the cells, the flow direction of the fluid is the longitudinal direction of the cells.

A honeycomb structure of the present invention can employ an embodiment where all the cells mutually have displacement in the fluid flow direction.

In a honeycomb structure of the present invention, the entire length of the cells is preferably. 150 mm or more, more preferably 200 mm or more.

In a honeycomb structure of the present invention, the mean pore diameter of the partition walls is preferably 5 to 40 µm.

In a honeycomb structure of the present invention, it is preferable that a total displacement amount which is the maximum displacement amount between any two cells is not smaller than the length of the plugging material.

In a plugged honeycomb structure of the present invention, it is preferable that two adjacent cells mutually have displacement in the fluid flow direction and that the displacement amount between two adjacent cells is not smaller than the length of the plugging material.

In a plugged honeycomb structure of the present invention, it is preferable that two adjacent cells among all the cells mutually have displacement in the fluid flow direction and that the displacement amount between two adjacent cells is not smaller than the length of the plugging material. This means that the "displacement amount between" at least a pair of "two adjacent cells" present in the honeycomb structure is not shorter than the length of the plugging material. It is more preferable that 80% or more of the "displacement amount between two adjacent cells" present in the honeycomb structure is not shorter than the length of the plugging material.

In a plugged honeycomb structure of the present invention, it is preferable that a total area A (mm²) of the cross sections perpendicular to a longitudinal direction of the predetermined cells each plugged in the one end portion on the one side and a total area B (mm²) of the cross sections perpendicular to the longitudinal direction of the other cells plugged in the end portion on the other side satisfy the relation of A<B.

In a plugged honeycomb structure of the present invention, it is preferable that the shape of the cross section perpendicular to the longitudinal direction of the predetermined cells each plugged in the one end portion on the one side and the shape of the cross section perpendicular to the longitudinal direction of the other cells each plugged in the end portion on the other side are different.

In a plugged honeycomb structure of the present invention, it is preferable that the partition walls comprise a porous partition wall matrix and a surface layer provided on only the fluid inflow side or on both the fluid inflow side and the fluid outflow side of the partition wall matrix.

In a honeycomb structure of the present invention, since a plurality of cells have the same entire length, and a plurality of cells mutually have displacement in the fluid flow direction, the structure has unevenness (concave portions and convex portions) on the two end faces, and they have mutually complementary shapes. That is, if a concave portion is present on one end face, a convex portion having the same shape as the shape of the space of the concave portion is present on the other end face. Such a honeycomb structure of the present invention can be obtained by manufacturing a honeycomb structure without unevenness and processing the two end faced by grinding or the like.

Though a honeycomb structure of the present invention does not have to have a segment structure, a honeycomb structure having a segment structure is preferable. By displacing the segments, a honeycomb structure of the present invention can be realized. That is, a honeycomb structure of the present invention is preferably a honeycomb structure (segment structure) where a plurality of segments are unitarily bonded by means of a bonding material to have a segment structure, the entire length of the segments is the same, and at least two of the segments mutually have displacement in a fluid flow direction. In other words, the honeycomb structure (segment structure) of the present invention is a structure provided with a honeycomb segment bonded article obtained by unitarily bonding, with a bonding material, a plurality of honeycomb-shaped honeycomb segments each having a plurality of cells separated by porous partition walls and formed in parallel with one another between two end faces and an outer peripheral layer for covering the peripheral surface of the honeycomb segment bonded article, where the honeycomb segments have the same entire length, and at least two of the honeycomb segments mutually have displacement in the fluid flow direction.

In the honeycomb structure (segment structure) of the present invention having a segment structure, since the honeycomb segments have the same entire length, the length in the fluid flow direction as a honeycomb structure is the same, and the cells have the same length. In addition, since honeycomb segments are disposed to mutually have displacement in the fluid flow direction, two end faces of the honeycomb structure have unevenness. That is, in the honeycomb structure (segment structure) of the present invention having a segment structure, cells have displacement on a segment basis, and the honeycomb structure (segment structure) of the present invention is also a honeycomb structure where cells have displacement in the fluid flow direction without doubt.

Incidentally, in the present specification, when a honeycomb structure of the present invention is simply referred to, it means a honeycomb structure including a honeycomb structure (segment structure).

However, honeycomb structures of the present invention include a honeycomb structure obtained by manufacturing a honeycomb structure having a segment structure without unevenness, followed by subjecting the two end faces to processing by grinding or the like (without displacing the honeycomb segment). Honeycomb structures of the present invention do not exclude this embodiment.

Since a honeycomb structure (segment structure) of the present invention corresponds with a specific example (lower conception) of a honeycomb structure of the present invention and is a preferable embodiment, it is naturally provided with preferable characteristics of a honeycomb structure of the present invention. That is, a honeycomb structure (segment structure) of the present invention can employ an embodiment where all the segments mutually have displacement in the fluid flow direction. In a honeycomb structure (segment structure) of the present invention, it is preferable that the honeycomb segments have the entire length of 150 mm or more. In a honeycomb structure (segment structure) of the present invention, the mean pore diameter of the partition walls is preferably 5 to 40 µm. A honeycomb structure (segment structure) of the present invention employs an embodiment where each of predetermined cells among the cells is plugged with a plugging material filled in the cells on an end portion on one side, and each of the other cells is plugged with a plugging material filled in the cells on the end portion on the other side, opposite to the predetermined cells (referred to as a plugged honeycomb structure (segment structure) of the present invention). The plugged honeycomb structure (segment structure) of the present invention is included in a honeycomb structure (segment structure) of the present invention. In a plugged honeycomb structure (segment structure) of the present invention, it is preferable that two adjacent honeycomb segments among all the honeycomb segments have displacement in the fluid flow direction and that the displacement amount between two adjacent cells is not smaller than the length of the plugging material. This means that at least a pair of "two adjacent honeycomb segments" has displacement in the fluid flow direction. It is more preferable that 80% of "two adjacent honeycomb segments" have displacement in the fluid flow direction. In a plugged honeycomb structure (segment structure) of the present invention, it is preferable that total displacement amount which is the maximum displacement amount between any two cells is not smaller than the length of the plugging material. In a plugged honeycomb structure (segment structure) of the present invention, it is preferable that a total area A (mm²) of the cross sections perpendicular to a longitudinal direction of the predetermined cells each plugged in the one end portion on the one side and a total area B (mm²) of the cross sections perpendicular to the longitudinal direction of the other cells plugged in the end portion on the other side satisfy the relation of A<B. In a plugged honeycomb structure (segment structure) of the present invention, it is preferable that the shape of the cross section perpendicular to the longitudinal direction of the predetermined cells each plugged in the one end portion on the one side and the shape of the cross section perpendicular to the longitudinal direction of the other cells each plugged in the end portion on the other side are different.

Next, according to the present invention, there is provided a diesel particulate filter having any one of plugged honeycomb structures described above.

Next, according to the present invention, there is provided a catalyst carrier obtained by loading a catalyst on any one of honeycomb structures described above.

A catalyst carrier is used for a gasoline engine exhaust gas purification ternary catalyst, a gasoline engine or diesel engine exhaust gas purification oxidation catalyst, a NOₓ selective reduction SCR catalyst, a NOₓ adsorber catalyst, and the like. The gasoline engine exhaust gas purification ternary catalyst contains a carrier coat (active alumina or the like) for coating the partition walls of any one of the aforementioned honeycomb structures and a noble metal (Pt, Rh, Pd, or the like) dispersed and loaded inside the carrier coat as a catalyst. The gasoline engine or diesel engine exhaust gas purification oxidation catalyst contains a noble metal (Pt, Rh, Pd, or the like) as a catalyst. In addition, the NOₓ selective reduction SCR catalyst contains at least one kind selected from the group consisting of metal substitution zeolite, vanadium, titania, tungsten oxide, silver and alumina as a catalyst. The NOₓ adsorber catalyst contains an alkali metal (K, Na, Li, or the like) or an alkali earth metal (Ca or the like) as a catalyst. Incidentally, a catalyst can be loaded on the honeycomb structure by preparing catalyst slurry containing a catalyst and coating the catalyst slurry on the surface of the pores of the partition walls of the honeycomb structure by a method such as suction, followed by drying at room temperature or under heating conditions.

Next, according to the present invention, there is provided a converter obtained by canning any one of honeycomb structures described above with attaching a sensor thereto.

In a honeycomb structure of the present invention, since a plurality of cells have the same entire length, and cells mutually have displacement in the fluid flow direction to have unevenness on the two end faces, portions having high temperature mutually have displacement in the fluid flow direction on a cell or partition wall basis or on a segment basis if the structure has a segment structure. Therefore, when the structure is used for a DPF, heat transfer in the diametral direction is easily caused to increase the heat release amount, thereby hardly having super temperature rise.

In addition, since the two end faces have unevenness, the end face on the exhaust gas outlet side when it is used for a DPF naturally has unevenness formed thereon. Therefore, the heat release area is increased, thereby hardly having super temperature rise.

Further, since the length in the fluid flow direction is not changed, the PM deposition amount is the same, and the problem of easily having super temperature rise only in the central portion on the exhaust gas (fluid) outlet side is not caused.

Further, since the cells have the same entire length, pressure loss is uniform among the cells to inhibit deterioration in exhaust gas purification performance due to ineffective working of the catalyst in the cells where gas hardly flows.

### Brief Description of the Drawings

[Fig. 1] Fig. 1 is a cross sectional view showing a cross section in parallel to the fluid flow direction, schematically showing an embodiment of a honeycomb structure of the present invention.
[Fig. 2] Fig. 2 is a cross sectional view showing a cross section in parallel to the fluid flow direction, schematically showing another embodiment of a honeycomb structure of the present invention.
[Fig. 3] Fig. 3 is a cross sectional view showing a cross section in parallel to the fluid flow direction, schematically showing still another embodiment of a honeycomb structure of the present invention.
[Fig. 4] Fig. 4 is a cross sectional view showing a cross section in parallel to the fluid flow direction, schematically showing still another embodiment of a honeycomb structure of the present invention.
[Fig. 5] Fig. 5 is a cross sectional view showing a cross section in parallel to the fluid flow direction, schematically showing still another embodiment of a honeycomb structure of the present invention.
[Fig. Fig. 6 is a cross sectional view showing a cross section in parallel to the fluid flow direction, schematically showing still another embodiment of a honeycomb structure of the present invention.
[Fig. 7A] Fig. 7A is a front view schematically showing one embodiment of a honeycomb structure of the present invention.
[Fig. 7B] Fig. 7B is a perspective view showing the 7B portion surrounded by broken lines of Fig. 7A.
[Fig. 7C] Fig. 7C is a perspective view showing the 7C portion surrounded by broken lines of Fig. 7A.
[Fig. 8A] Fig. 8A is a front view schematically showing one embodiment of a honeycomb structure of the present invention.
[Fig. 8B] Fig. 8B is a perspective view showing the 8B portion surrounded by broken lines of Fig. 8A.
[Fig. 8C] Fig. 8C is a perspective view showing the 8C portion surrounded by broken lines of Fig. 8A.
[Fig. 9A] Fig. 9A is a front view schematically showing another embodiment of a honeycomb structure of the present invention.
[Fig. 9B] Fig. 9B is a perspective view showing the 9B portion surrounded by broken lines of Fig. 9A.
[Fig. 9C] Fig. 9C is a perspective view showing the 9C portion surrounded by broken lines of Fig. 9A.
[Fig. 10A] Fig. 10A is a front view schematically showing still another embodiment of a honeycomb structure of the present invention.
[Fig. 10B] Fig. 10B is a perspective view showing the 10B portion surrounded by broken lines of Fig. 10A.
[Fig. 10C] Fig. 10C is a perspective view showing the 10C portion surrounded by broken lines of Fig. 10A.
[Fig. 11A] Fig. 11A is a front view schematically showing still another embodiment of a honeycomb structure of the present invention.
[Fig. 11B] Fig. 11B is a perspective view showing the 11B portion surrounded by broken lines of Fig. 11A.
[Fig. 11C] Fig. 11C is a perspective view showing the 11C portion surrounded by broken lines of Fig. 11A.
[Fig. 12A] Fig. 12A is a front view schematically showing still another embodiment of a honeycomb structure of the present invention.
[Fig. 12B] Fig. 12B is a perspective view showing the 12B portion surrounded by broken lines of Fig. 12A.
[Fig. 12C] Fig. 12C is a perspective view showing the 12C portion surrounded by broken lines of Fig. 12A.
[Fig. 13A] Fig. 13A is a front view schematically showing still another embodiment of a honeycomb structure of the present invention.
[Fig. 13B] Fig. 13B is a perspective view showing the 13B portion surrounded by broken lines of Fig. 13A.
[Fig. 13C] Fig. 13C is a perspective view showing the 13C portion surrounded by broken lines of Fig. 13A.
[Fig. 14A] Fig. 14A is a front view schematically showing still another embodiment of a honeycomb structure of the present invention.
[Fig. 14B] Fig. 14B is a perspective view showing the 14B portion surrounded by broken lines of Fig. 14A.
[Fig. 14C] Fig. 14C is a perspective view showing the 14C portion surrounded by broken lines of Fig. 14A.
[Fig. 14D] Fig. 14D is a perspective view showing the 14D portion surrounded by broken lines of Fig. 14A.
[Fig. 15] Fig. 15 is a perspective view showing honeycomb segments bonded together, explaining displacement in a honeycomb structure of the present invention.
[Fig. 16] Fig. 16 is a cross sectional view showing an embodiment of an exhaust gas treatment apparatus using a honeycomb structure of the present invention.
[Fig. 17] Fig. 17 is a cross sectional view showing a cross section in parallel to the fluid flow direction, showing an example of a conventional honeycomb structure.
[Fig. 18] Fig. 18 is a cross sectional view showing a cross section in parallel to the fluid flow direction, showing another example of a conventional honeycomb structure.
[Fig. 19] Fig. 19 is a cross sectional view showing a cross section in parallel to the fluid flow direction, showing still another example of a conventional honeycomb structure.
[Fig. 20A] Fig. 20A is a perspective view showing an embodiment of a conventional honeycomb structure.
[Fig. 20B] Fig. 20B is a perspective view schematically showing a honeycomb segment constituting a honeycomb structure shown in Fig. 20A.
[Fig. 20C] Fig. 20C is a cross sectional view along the A-A line in Fig. 20B.
[Fig. 21A] Fig. 21A is a front view (partially enlarged view) schematically showing an embodiment of a honeycomb structure of the present invention.
[Fig. 21B] Fig. 21B is a back view (partially enlarged view) schematically showing an embodiment of a honeycomb structure of the present invention.
[Fig. 22] Fig. 22 is a partial cross sectional view showing an enlarged partition wall of a honeycomb structure of the present invention.
[Fig. 23] Fig. 23 is a perspective view schematically showing one embodiment of a honeycomb structure of the present invention.
[Fig. 24] Fig. 24 is a perspective view schematically showing one embodiment of a honeycomb structure of the present invention.

### Reference Numerals

2: honeycomb segment, 4: outer peripheral layer, 5: cell, 5a: quadrangular cell, 5b: octagonal cell, 6: partition wall, 7: plugging material, 8: outer wall layer, 9: bonding material layer, 10: honeycomb segment bonded article, 19: convex portion, 161: current plate, 162: diesel oxidation catalyst, 163: diesel particulate filter, 164: mat, 165: can, 200: honeycomb structure, 232: honeycomb segment, 235: cell, 242: honeycomb segment, 245: cell

### Description of the Preferred Embodiments

Hereinbelow, embodiments of the present invention are described with appropriately referring to drawings. However, the present invention should not be construed by limiting to these, and various changes, modifications, improvements, and substitutions may be added thereto on the basis of knowledge of a person of ordinary skill within the range of not impairing the gist of the present invention. For example, the drawings express suitable embodiments of the present invention. However, the present invention is by no means limited by embodiments shown in the drawings and information shown in the drawings. Upon carrying out or investigating the present invention, the same means or a means equivalent to one described in the present specification can be applied. However, a suitable means is one described below.

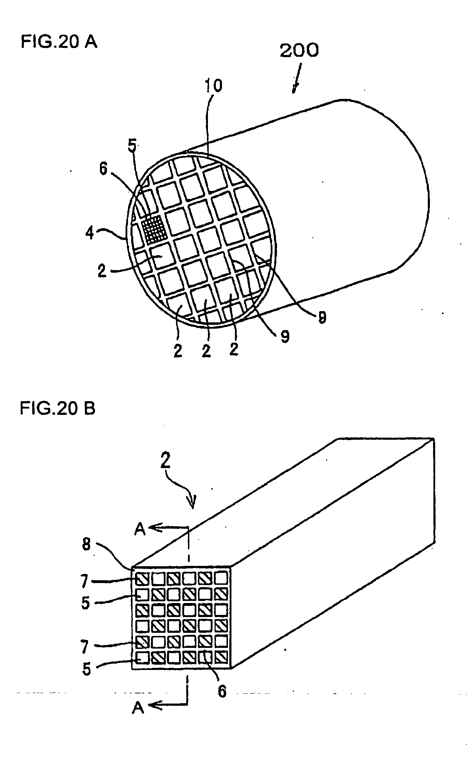

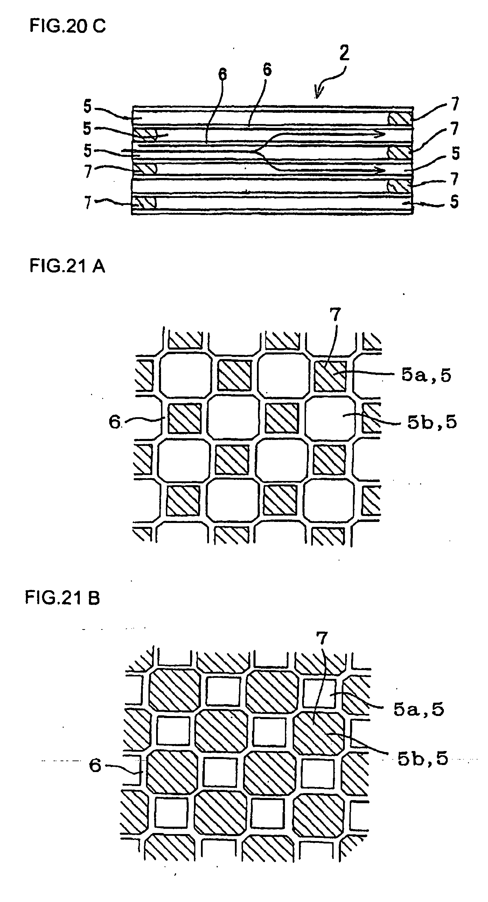

A honeycomb structure of the present invention is based on a conventional honeycomb structure. Therefore, in the first place, a general (conventional) honeycomb structure without characteristics of a honeycomb structure of the present invention will be described. Fig. 20A is a perspective view schematically showing an example of a conventional honeycomb structure. The honeycomb structure shown in Fig. 20A has a segment structure. Fig. 20B is a perspective view schematically showing a honeycomb segment constituting a honeycomb structure shown in Fig. 20A. Fig. 20C is a cross sectional view along the A-A line of Fig. 20B.

As shown in Figs. 20A to 20C, the honeycomb structure 200 has a columnar shape having two end faces and the outer peripheral face connecting the two end faces and has a segment structure, where a cross sectional shape of the whole structure cut along a plane perpendicular to the fluid flow direction is circular. Between the two end faces, there are formed a plurality of cells 5 separated by porous partition walls 6 and functioning as fluid (exhaust gas or the like) passages in parallel with one another to form a honeycomb shape as a whole. The honeycomb structure 200 is provided with a honeycomb segment bonded article 10 where a plurality of honeycomb segments 2 are unitarily bonded by means of a bonding material layer 9 and an outer peripheral layer 4 (layer forming an outer peripheral face) for covering the peripheral faces of the honeycomb segment bonded article 10. In other words, the honeycomb structure 200 is a structure covered with the outer peripheral layer 4 provided in order to protect the peripheral surface of the honeycomb segments 2 (honeycomb segment bonded article 10).

A honeycomb segment 2 has a columnar shape having two end faces and an outer wall face connecting the two end faces. The honeycomb segment 2 has a square shape of the whole cross section perpendicular to the fluid flow direction. The honeycomb segment 2 has a shape of a part of the whole shape of a honeycomb structure 200 having a plurality of cells 5 functioning as fluid passages for exhaust gas as the fluid, and a plurality of honeycomb segments 2 are unitarily bonded by a bonding material layer 9 to constitute the honeycomb structure 200. In addition, the honeycomb segment 2 is provided with a large number of partition walls 6 disposed so as to form the cells 5 and an outer wall layer 8 (layer forming an outer wall face) disposed so as to surround the partition walls 6.

In Fig. 20A, cells 5 and partition walls 6 are shown in only one honeycomb segment 2. Each of the honeycomb segments 2 has a shape constituting a part of the whole structure of the honeycomb structure 200 (honeycomb segment bonded article 10, see Fig. 20A) as shown in Figs. 20B and 20C and a shape constituting the whole structure by being combined in a direction perpendicular to the fluid flow direction.

The cells 5 are disposed in parallel to one another in the fluid flow direction of the honeycomb structure 200, and end portions of adjacent cells 5 are alternately plugged by a plugging material 7 (filler). That is, the honeycomb structure 200 is a plugged honeycomb structure. Predetermined cells 5 (inflow cells) have openings on the left end portion side of Figs. 20B and 20C, while the right end portions are plugged by the plugging material 7. The other cells 5 (outflow cells) adjacent to the predetermined cells are plugged with the plugging material 7 on the left end portion side, while the right end portions are open. By such plugging, the end faces of the honeycomb segment 2 show a checkerwise pattern.

In the case of disposing a honeycomb structure 200 having such honeycomb segments 2 bonded together as a DPF in an exhaust gas exhaust system, the exhaust gas flows into cells 5 in each of the honeycomb segments 2 from the left side of Fig. 20C and moves toward the right side. Fig. 20C shows the case where the inlet of exhaust gas (fluid) is on the left side of the honeycomb segment 2, and the exhaust gas flows into the honeycomb segment 2 from the cells 5 (inflow cells) open without being plugged. The exhaust gas flowing into the cells 5 (inflow cells) passes through porous partition walls 6 and discharged from the other cells (outflow cells). When the exhaust gas passes through the partition walls 6, PM including soot in exhaust gas is trapped by the partition walls 6. Thus, the exhaust gas can be purified.

By such trapping, since particulates including soot deposit inside the honeycomb segment 2 with the passage of time to increase pressure loss, regeneration for combusting PM is regularly performed.

Though a structure of a general (conventional) honeycomb structure and a function of a DPF have been described above, these can be applied also to a honeycomb structure of the present invention. However, in a honeycomb structure of the present invention, the cells have the same entire length, and a plurality of cells mutually have displacement in the fluid flow direction in such a manner that the end faces have unevenness as a result, which is different from a conventional honeycomb structure. In each of the conventional honeycomb structure 200 shown in Figs. 20A to 20C and the conventional honeycomb structure shown in Fig. 17 (referred to as a flat end face type), the two end faces have no unevenness though the lengths in the fluid flow direction are the same. In each of the conventional honeycomb structure shown in Fig. 18 (referred to as a depressed center type) and the conventional honeycomb structure shown in Fig. 19 (referred to as a protruding center type), the lengths in the fluid flow direction are not the same though one end face has unevenness. In contrast, in a honeycomb structure of the present invention, the lengths in the fluid flow direction are the same, and the two end faces have unevenness. In addition, as described later, in a honeycomb structure of the present invention, the whole outer shape may be a thin plate shape or a roll shape and is not limited to a narrowly-defined columnar shape.

Figs. 1 to 14D are views schematically showing embodiments of a honeycomb structure of the present invention. Among them, Figs. 1 to 6 are cross-sectional view each showing a cross section in parallel to the fluid flow direction.

In a honeycomb structure shown in Fig. 1, the honeycomb segments 2 have the same length in the fluid flow direction (left-right direction in Fig. 1), and some honeycomb segments 2 are provided in a state of having displacement (shifting) toward the inlet side (left side in Fig. 1) in the fluid flow direction. As a result, a convex portion is formed on the end face on the (fluid) inlet side, a concave portion is formed on the end face on the (fluid) outlet side. Since all the honeycomb segments 2 have the same length, the lengths in the fluid flow direction of a honeycomb structure shown in Fig. 1 are the same.

The honeycomb structure shown in Fig. 2 has unevenness which is opposite to that of the honeycomb structure shown in Fig. 1. That is, in a honeycomb structure shown in Fig. 2, the honeycomb segments 2 has the same length in the fluid flow direction, and some honeycomb segments 2 are provided in a state of having displacement (shifting) toward the outlet side (right side in Fig. 2) in the fluid flow direction. As a result, a concave portion is formed on the end face on the (fluid) inlet side, and a convex portion is formed on the end face on the (fluid) outlet side. Since all the honeycomb segments 2 have the same length, the lengths in the fluid flow direction of a honeycomb structure shown in Fig. 2 are the same.

In the honeycomb structure shown in Fig. 3, honeycomb segments 2 are displaced toward inlet side and outlet side. That is, in the honeycomb structure shown in Fig. 3, the honeycomb segments 2 have the same length in the fluid flow direction, and the honeycomb segment 2 located in the center is provided so as to have displacement toward outlet side (right side in Fig. 3) in the fluid flow direction, and the second from the top and the second from the bottom among the honeycomb segments 2 are provided so as to have displacement toward inlet side (left side in Fig. 3) of the fluid flow direction. As a result, a concave portion and a convex portion are formed on each of the (fluid) inlet side and outlet side end faces. Since all the honeycomb segments 2 have the same length, the lengths in the fluid flow direction of a honeycomb structure shown in Fig. 3 are the same. In Figs. 1 to 3, the black arrows show heat transfer. As shown in these figures, since the heat transfer in the diametral direction becomes easy, the heat release amount is increased to hardly cause super temperature rise.

The honeycomb structures shown in Figs. 4 to 6 shows embodiments which can be realized as a structure regardless of having a segment structure. In a honeycomb structure shown in Fig. 4, a smoothly continuous convex portion is formed on the end face on the (fluid) inlet side, while a smoothly continuous concave portion is formed on the end face on the (fluid) outlet side. In a honeycomb structure shown in Fig. 5, smoothly continuous concave portions and convex portions are formed on the end face on the (fluid) inlet side, while smoothly continuous convex portions and concave portions are formed on the end face on the (fluid) outlet side. In a honeycomb structure shown in Fig. 6 (referred to as a continuously protruding outlet center type), a smoothly continuous concave portion is formed on the end face on the (fluid) inlet side, while a smoothly continuous convex portion is formed on the end face on the (fluid) outlet side. Of course, like a honeycomb structure having a segment structure, discontinuous convex and concave may be employed.

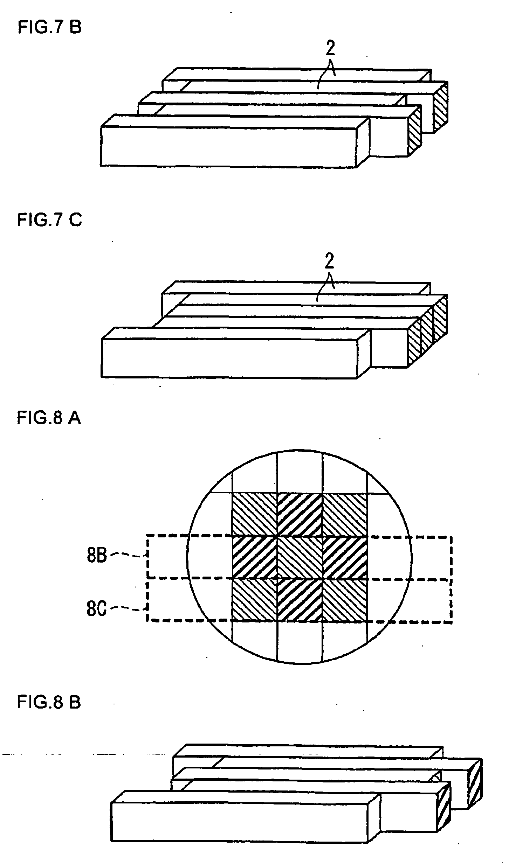

Fig. 7A is a front view (of a honeycomb structure of the present invention) showing an end face on the (fluid) outlet side. Fig. 7B is a perspective view showing the 7B portion surrounded by the broken lines of Fig. 7A. Fig. 7C is a perspective view showing the 7c portion surrounded by the broken lines of Fig. 7A. In Fig. 7A, the stripes (hatching) express the same or different mode of displacement of the honeycomb segments 2 (the same can be applied to following Figs. 8A, 9A, 10A, 11A, 12A, 13A, and 14A). In a honeycomb structures shown in Figs. 7A to 7C (referred to as a doughnut type), eight honeycomb segments 2 have displacement (shifting) toward the outlet side. Therefore, a convex portion is formed in a square doughnut shape on the end face on the outlet side, while a concave portion having a square doughnut-shaped space is formed on the end face on the inlet side.

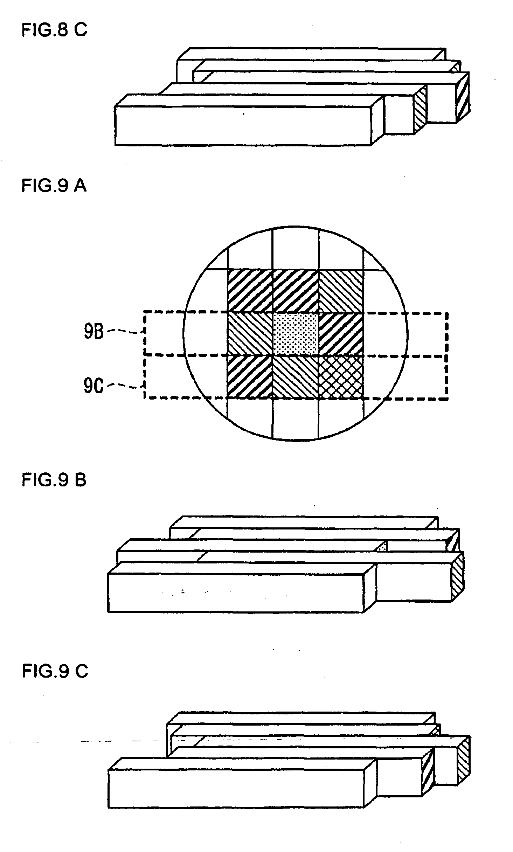

Fig. 8A is a front view (of a honeycomb structure of the present invention) showing an end face on the (fluid) outlet side. Fig. 8B is a perspective view showing the 8B portion surrounded by broken lines of Fig. 8A, and Fig. 8C is a perspective view showing the 8C portion surrounded by broken lines of Fig. 8A. In the honeycomb structures shown in Figs. 8A to 8C (referred to as a doughnut depression and protrusion type), nine honeycomb segments 2 have displacement (shifting) on the outlet side, and, among them, four honeycomb segments 2 other than the five segments at the four corners and in the center have larger displacement than the five segments 2 at the four corners and in the center to form a convex portion on the end face on the outlet side, and a concave portion having a space having a shape complementary with the convex portion is formed on the end face on the inlet side.

Fig. 9A is a front view (of a honeycomb structure of the present invention) showing the end face on the (fluid) outlet side. Fig. 9B is a perspective view showing the 9B portion surrounded by broken lines of Fig. 9A, and Fig. 9C is a perspective view showing the 9C portion surrounded by broken lines of Fig. 9A. In the honeycomb structures shown in Figs. 9A to 9C (referred to as a random type), like the doughnut type shown in Figs. 7A to 7C, eight honeycomb segments 2 have displacement (shifting) toward the outlet side. There, the displacement amount is not uniform, and the honeycomb segment 2 in the center is further displaced toward the inlet side to form a convex portion and a concave portion on the end face on the outlet side and a complementary concave portion and a complementary convex portion on the end face on the inlet side.

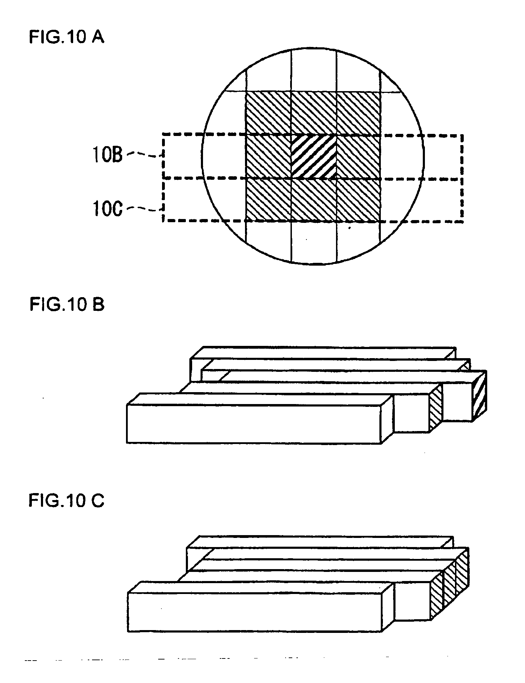

Fig. 10A is a front view (of a honeycomb structure of the present invention) showing the end face on the (fluid) outlet side. Fig. 10B is a perspective view showing the 10B portion surrounded by broken lines of Fig. 10A, and Fig. 10C is a perspective view showing the 10C portion surrounded by broken lines of Fig. 10A. In the honeycomb structures shown in Figs. 10A to 10C (referred to as a protruding outlet center type), like the doughnut depression and protrusion type shown in Figs. 8A to 8C, nine honeycomb segments 2 have displacement (shifting) toward the outlet side, and the honeycomb segment 2 in the center has larger displacement than the other eight honeycomb segments 2 to form a convex portion on the end face on the outlet side, and a concave portion having a space having a shape complementary with the convex portion is formed on the end face on the inlet side. In the aforementioned random type and protruding outlet center type, generally, the latter has higher heat release effect, while the former can more easily obtain high structural strength.

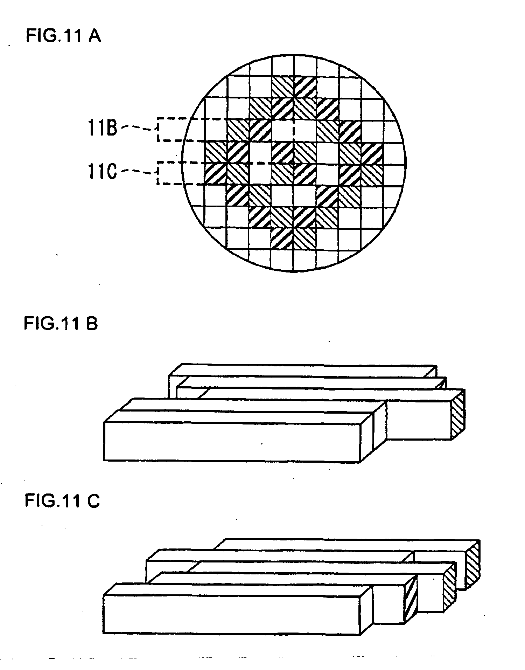

Figs. 11A to 14D are view showing embodiments having more honeycomb segments than Figs. 7A to 10C. Fig. 11A is a front view (of a honeycomb structure of the present invention) showing the end face on the (fluid) outlet side. Fig. 11B is a perspective view showing the 11B portion surrounded by broken lines of Fig. 11A, and Fig. 11C is a perspective view showing the 11C portion surrounded by broken lines of Fig. 11A. In the honeycomb structures shown in Figs. 11A to 11C, 32 honeycomb segments 2 have displacement (shifting) toward the outlet side to form a convex portion on the end face on the outlet side, and a concave portion having a space having a shape complementary with the convex portion is formed on the end face on the inlet side. Incidentally, Figs. 11B and 11C show honeycomb segments 2 corresponding with a half diameter of the honeycomb structure in Fig. 11A.

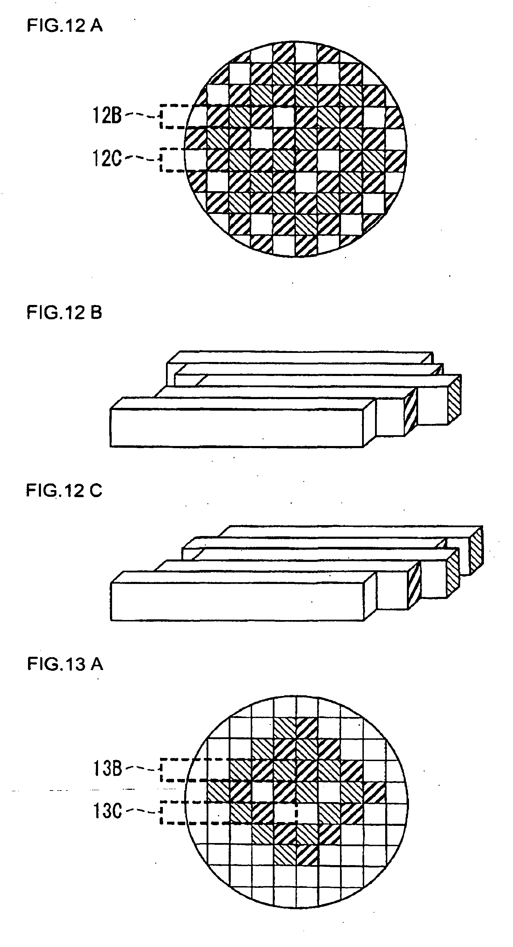

Fig. 12A is a front view (of a honeycomb structure of the present invention) showing the end face on the (fluid) outlet side. Fig. 12B is a perspective view showing the 12B portion surrounded by broken lines of Fig. 12A, and Fig. 12C is a perspective view showing the 12C portion surrounded by broken lines of Fig. 12A. Figs. 12B and 12C show honeycomb segments 2 corresponding with a half diameter of the honeycomb structure in Fig. 12A. In the honeycomb structure shown in Figs. 12A to 12C, more than half of the whole honeycomb segments 2 have displacement (shifting) toward the outlet side over the entire end face on the outlet side to form a convex portion on the end face on the outlet side, and a concave portion having a space having a shape complementary with the convex portion is formed on the end face on the inlet side.

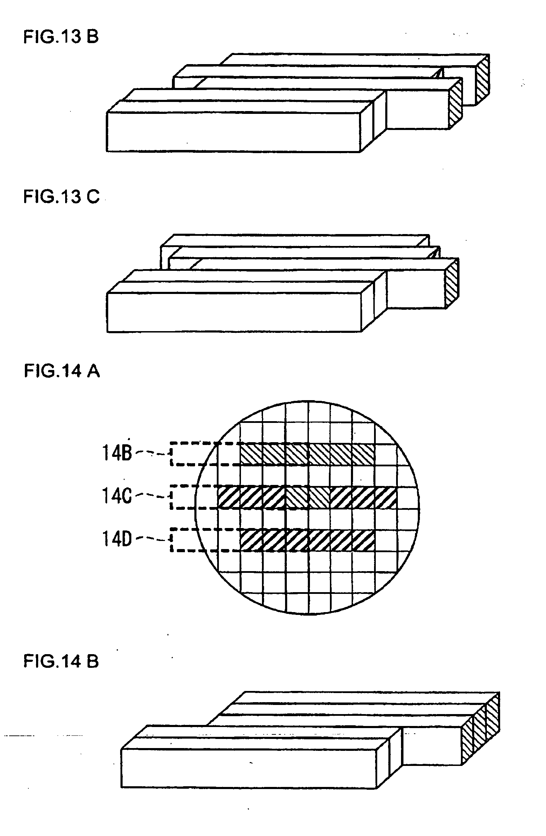

Fig. 13A is a front view (of a honeycomb structure of the present invention) showing the end face on the (fluid) outlet side. Fig. 13B is a perspective view showing the 13B portion surrounded by broken lines of Fig. 13A, and Fig. 13C is a perspective view showing the 13C portion surrounded by broken lines of Fig. 13A. Figs. 13B and 13C show honeycomb segments 2 corresponding with a half diameter of the honeycomb structure in Fig. 13A. In the honeycomb structure shown in Figs. 13A to 13C, the honeycomb segments 2 having displacement (shifting) toward outlet side are biased toward the upper side (of Fig. 13A) on the end face to form a convex portion on the end face on the outlet side, and a concave portion having a space having a shape complementary with the convex portion is formed on the end face on the inlet side.

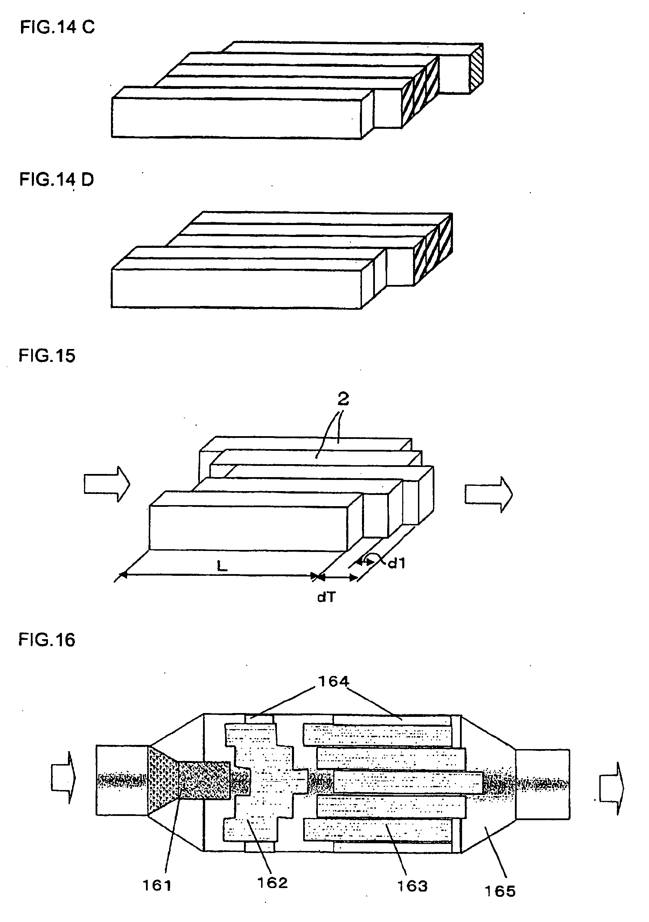

Fig. 14A is a front view (of a honeycomb structure of the present invention) showing the end face on the (fluid) outlet side. Fig. 14B is a perspective view showing the 14B portion surrounded by broken lines of Fig. 14A, Fig. 14C is a perspective view showing the 14C portion surrounded by broken lines of Fig. 14A, and Fig. 14D is a perspective view showing the 14D portion surrounded by broken lines of Fig. 14A. Figs. 14B, 14C, and 14D show honeycomb segments 2 corresponding with a half diameter of the honeycomb structure in Fig. 19A. In the honeycomb structure shown in Figs. 14A to 14D, like the honeycomb structure shown in Figs. 13A to 13C, the honeycomb segments 2 having displacement (shifting) toward outlet side are slightly biased toward the upper side (of Fig. 14A) on the end face to form a convex portion on the end face on the outlet side, and a concave portion having a space having a shape complementary with the convex portion is formed on the end face on the inlet side.

In Figs. 13A to 14D, the concave portion and the convex portion are asymmetrically disposed unlike the embodiments in Figs. 7A and 11C, where the concave portion and the convex portion are present in the central portion (portion in the vicinity of the central axis) in the diametrical direction of the honeycomb structure and almost symmetrically disposed with respect to the central axis. Such a honeycomb structure is effective in the case that the exhaust gas flow is asymmetric due to a pipe arrangement form for exhaust gas. For example, the two honeycomb structures shown in Figs. 13A to 14D are suitable for the case where the gas flow heats the upper side more easily.

In any of the honeycomb structures shown in Figs. 1 to 14D, the lengths in the fluid flow direction are the same. In addition, since heat transfer is easy, heat is easily released to hardly cause super temperature rise when it is used as a DPF (In the honeycomb structures shown in Figs. 1 to 3, heat transfer is shown by black arrows.). Further, they have a common point that the concave portion, the convex portion, the concave portion and convex portion on one end face have shapes complementary with the concave portion, the convex portion, the convex portion and concave portion on the other end face.

Next, the displacement amount in a honeycomb structure of the present invention which has a segment structure and segments mutually having displacement in the fluid flow direction will be described with referring to Fig. 15. Fig. 15 is a perspective view showing honeycomb segments bonded together with having displacement, which corresponds to Fig. 9C.

In a honeycomb structure of the present invention, the displacement amount d1 of the honeycomb segment 2 is preferably 5 mm or more, more preferably 15 mm or more, particularly preferably 30 mm or more as an absolute value. Further, the displacement amount d1 of the honeycomb segment 2 is desirably not shorter than the length of the plugging (plugging material 7 (filler), see Fig. 20C), particularly desirably not shorter than three times the length of the plugging. Incidentally, the displacement amount d1 is the amount of displacement between two adjacent honeycomb segments 2 on the same end face.

In a honeycomb structure of the present invention, the total displacement amount dT of the honeycomb segments 2 is preferably 5% or more of the entire length L, more preferably 10% or more, and particularly preferably 20% or more as a relative value. In addition, the total displacement amount dT of the honeycomb segments 2 is preferably 5 mm or more, more preferably 15 mm or more, particularly preferably 30 mm or more as an absolute value. Further, the total displacement amount dT of the honeycomb segments 2 is desirably not shorter than the length of the plugging (plugging material 7 (filler), see Fig. 20C), particularly desirably not shorter than three times the length of the plugging. Incidentally, the total displacement amount dT is the largest amount among the displacement amounts between any two honeycomb segments 2.

In embodiments having a smoothly continued concave or convex or a smoothly continued concave and convex on the end faces among honeycomb structures of the present invention, regardless of having a segment structure (see Figs. 4 to 6), the displacement is determined on the basis of the average cell height. That is, the difference between the average height of the partition walls surrounding one cell and the average height of the partition walls surrounding the adjacent cell is defined as the displacement amount.

Next, a detailed preferable embodiment in a honeycomb structure of the present invention is described. In a honeycomb structure of the present invention, the whole cross-sectional shape along a plane perpendicular to the fluid flow direction may be a circle, an ellipse, a racetrack shape, a ring shape, a roll shape, a thin plate shape, a quadrangle, or a partially transformed shape of them. In addition, a honeycomb structure of the present invention, a honeycomb segment may have a quadrangular shape, or its partially transformed shape, or a shape such as a triangle and a hexagon. Further, in a honeycomb structure of the present invention, a cross-sectional shape of a cell (shape of a cross section perpendicular to the longitudinal direction of the cell) may be a polygon, a circle, an ellipse, a racetrack shape, or a partially transformed shape of them.

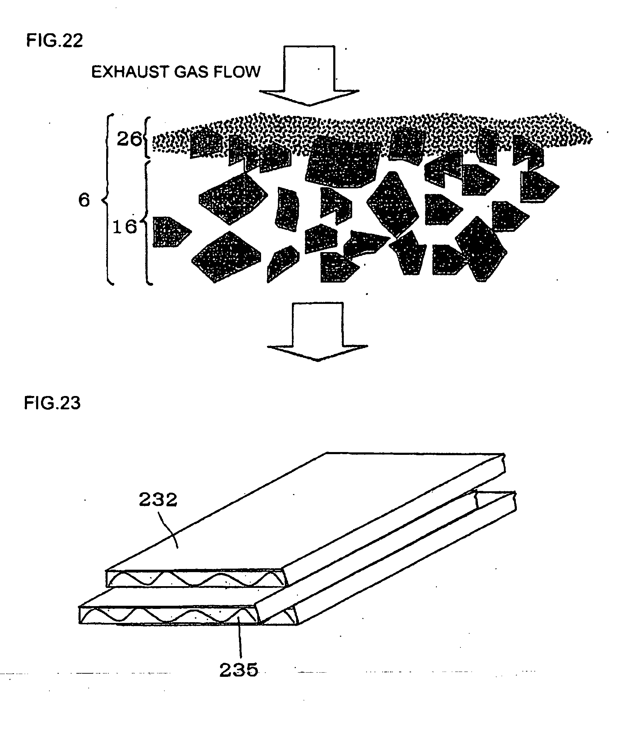

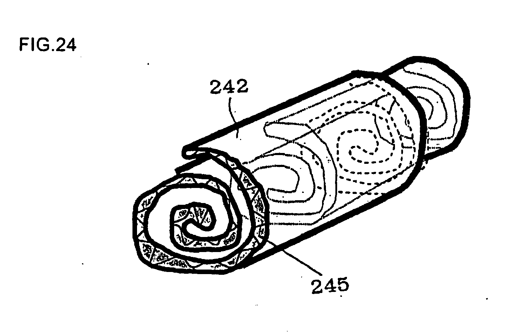

Both of Figs. 23 and 24 are perspective views, each showing an embodiment of a honeycomb structure which does not belongs to narrowly-defined columnar articles. In the embodiment shown in Fig. 23, corrugated cells 235 are disposed in a thin plate-shaped honeycomb segment 232 like corrugated board, where the honeycomb segment 232 has displacement. In the embodiment shown in Fig. 24, corrugated cells 245 are disposed in a roll shaped honeycomb segment 242 like corrugated board, where the honeycomb segment 242 has displacement.

A honeycomb structure of the present invention can trap PM containing soot discharged from a diesel engine by being disposed in an exhaust system or the like of the diesel engine in the case of being used as a DPF. In the case of using a honeycomb structure of the present invention as a DPF, it is general that the structure is a plugged honeycomb structure which has the cells all having the same cross-sectional shape (generally quadrangle) and the same opening area and each being plugged on an end portion in such a manner that each of the end face on the exhaust gas inlet side and the end face on the exhaust gas outlet side shows checkerwise pattern and has equivalent opening rate.

However, it is not necessary that all the cells have a single cross-sectional shape in a honeycomb structure of the present invention, and a mixture of an octagonal shape and a quadrangular shape is also a preferable embodiment. Fig. 21A is a front view (view showing one end face), and Fig. 21B is a back view (view showing the other end face). The Figs. 21A and 21B are views showing one embodiment of a honeycomb structure having different opening rates between the one end face and the other end face. In the embodiment shown in Figs. 21A and 21B, the square cells 5a and the octagonal cells 5b having an opening area larger than that of the square cells 5a are alternately disposed in two directions perpendicular to each other on each of the end faces. The square cells 5a are plugged with the plugging material 7 on one end face, and the octagonal cells 5b are plugged with the plugging material 7 on the other end face. Thus, by allowing the octagonal cells 5b having a larger opening area to be open on one end face and the square cells 5a having a smaller opening area to be open on the other end face, the opening rate of the one end face can be made higher than that of the other end face.

Then, when the honeycomb structure is used as a DPF, by disposing the one end face on the exhaust gas inlet side and the other end face on the exhaust gas outlet side, the PM trapping capacity is increased in comparison with a DPF (plugged honeycomb structure) having a single cross section (e.g., square) of the cells, and there is a high possibility of generating more heat upon regeneration. Therefore, the heat release effect of a honeycomb structure of the present invention works particularly effectively.

Suitable examples of the main material (main material forming the partition walls) for a plugged honeycomb structure of the present invention include silicon carbide, cordierite, aluminum titanate, sialon, mullite, silicon nitride, zirconium phosphate, zirconia, titania, alumina, silica, lithium aluminum silicate (LAS) and a combination thereof. In particular, suitable are ceramics such as silicon carbide, cordierite, mullite, silicon nitride, alumina, and alumina titanate. Of these, oxide type ceramics are particularly preferable in that they are excellent in the costs and thermal shock, and silicon carbide is particularly preferable from the viewpoints of thermal capacity and thermal conductivity.

In a plugged honeycomb structure of the present invention, the partition wall has a mean pore diameter of preferably 1 to 100 µm, more preferably 5 to 40 µm. It is further preferably 10 to 15 µm with respect to the regulation of the PM number, which is expected to be introduced in the next generation. When it is below 1 µm, pressure loss may increase even in the case that the PM deposition amount is small when the structure is used as a DPF. When, it is below 5 µm, pressure loss may increase even in the case that the PM deposition amount is small when the DPF with a catalyst loaded thereon is used. When it is above 100 µm, the structure becomes brittle, and the partition wall may easily have an omission. When it is above 40 µm, PM trapping performance may be deteriorated when no PM is deposited. In the case of the range from 10 to 15µm, as a leakage quantity of the number of PM level, a trapping performance of 6×10¹¹ pieces/km or less can be realized, and pressure loss increase after loading of a catalyst can be suppressed. In particular, when trapping performance of the number of PM level is required, since the trapping property is remarkably lowered due to local melting or a fine crack by super temperature rise, a honeycomb structure of the present invention is effective.

In a plugged honeycomb structure of the present invention, the partition walls have a porosity of preferably 38 to 70%, more preferably 40 to 55%. When it is below 38%, pressure loss may increase, while, when it is above 70%, the structure becomes brittle, and the partition wall may easily have an omission. Further, when it is 40 to 55%, pressure loss increase is small in the case that PM deposition is small when it is used as a DPF, and super temperature rise when PM is combusted and removed is hardly caused, which is preferable. Incidentally, the mean pore diameter and the porosity of the partition walls are values obtained by measurement with a mercury porosimeter (trade name: Auto Pore III, model 9405, produced by Micromeritics Instrument Corporation). The partition walls have a thickness of preferably 100 to 700 µm, more preferably 200 to 500 µm. When it is below 100 µm, strength (of the honeycomb structure) may be lowered, while, when it is above 700 µm, pressure loss when exhaust gas passes through the cells may be increased when the structure is used as a DPF. Incidentally, the thickness of the partition walls was a value obtained by measurement in a method where a cross section in the fluid flow direction is observed with a microscope.

In a plugged honeycomb structure of the present invention, it is preferable that the partition walls have a two-layered or three-layered structure. That is, it is preferable that the partition walls have a porous partition wall matrix and a surface layer provided on only the exhaust gas (fluid) inflow side or both the inflow side and the outflow side of the partition wall matrix. In other words, it is preferable that the partition walls are constituted of a partition wall matrix and a surface layer. Fig. 22 is a view showing an embodiment of a honeycomb structure of the present invention and partial cross-sectional view showing an enlarged partition wall. In the embodiment shown in Fig. 22, in the partition wall 6, a surface layer 26 is provided on (only) the inflow side of the partition wall matrix 16.

In the embodiment shown in Fig. 22, when it is used as a DPF, exhaust gas (fluid) flows into the opening (unplugged) cells from one end face side, passes through the partition walls 6 from the side where the surface layer 26 is provided to the partition wall matrix 16 side, flows out in the cells open (unplugged) on the other end face side, and discharged from the other end face to the outside. When the exhaust gas passes through the partition walls 6 functioning as a filtering layer, PM contained in the exhaust gas is trapped by the partition walls 6 (the surface layer 26 and the partition wall matrix 16).

However, when a catalyst is loaded on the partition wall matrix 16, since the surface layer 26 is provided on the inflow side, PM hardly enters the partition wall matrix 16 to have poor contact with the catalyst loaded on the partition wall matrix 16. Therefore, PM combustion at low temperature cannot be expected, and PM (soot) deposition amount is increased to easily generate much heat upon compulsory regeneration. Even in such a case, in a plugged honeycomb structure of the present invention, since cells have displacement in the fluid flow direction, super temperature rise can be inhibited.

In addition, when the surface layer is provided on the outflow side, in the case that much PM (soot) deposits at relatively low temperature, much PM enters the partition wall matrix, and there can be considered a case of combustion at a breath due to the contact with the catalyst. However, even in this case, in a plugged honeycomb structure of the present invention, since cells have displacement in the fluid flowdirection, super temperature rise can be inhibited.

The cell density in a cross section perpendicular to the fluid flow direction in a plugged honeycomb structure of the present invention is preferably 6 to 600 cpsi (0.9 to 93 cells/cm²), more preferably 50 to 400 cpsi (7.8 to 62 cells/cm²). When it is below 0.9 cells/cm², strength (of the honeycomb structure) may decrease. When it is above 93 cells/cm², pressure loss may become high. In particular, when it is below 62 cells/cm², thermal capacity becomes small to have a risk of super temperature rise. Therefore, a honeycomb structure of the present invention can work effectively. It is preferably 7.8 cells/cm² or more because PM deposition pressure loss can be suppressed.

The thermal expansion coefficient in the cell communication direction of a plugged honeycomb structure at 40 to 800°C is preferably 5.0×10⁻⁶/°C or less, more preferably 1.2×10⁻⁶/°C or less, particularly preferably 0.8×10⁻⁶/°C or less, in the case of not having a segment structure. When it is 5.0×10⁻⁶/°C or less, thermal stress generating when the structure is exposed to high temperature exhaust gas can be suppressed to be within an allowable range, and thermal stress fracture of the honeycomb structure can be inhibited. The smaller the thermal expansion coefficient is, the more preferable. However, the lower limit is about 1×10⁻¹⁰/°C. On the other hand, in the case of a segment structure, it is preferably 10.0×10⁻⁶/°C, more preferably 8.0×10⁻⁶/°C, particularly 5.0×10⁻⁶/°C though it depends on the size of the segment.

Next, an application example of a honeycomb structure of the present invention will be described. A honeycomb structure of the present invention can be used as a DPF as described above. Since a honeycomb structure of the present invention has unevenness in each of the two end faces, by combining parts (e.g., tapered portion, current plate, and sensor) constituting the pipe arrangement for exhaust gas so as to correspond with the unevenness, an exhaust gas treatment apparatus compact in the longitudinal direction (exhaust gas flow direction) can be constituted.

Fig. 16 is a cross-sectional view showing an embodiment of an exhaust gas treatment apparatus using a honeycomb structure of the present invention. In an exhaust gas purification apparatus shown in Fig. 16, a diesel oxidation catalyst 162 (DOC) and a diesel particulate filter 163 (DPF) which is a honeycomb structure of the present invention disposed on the exhaust gas downstream side are fixed by means of a mat 164 and installed in a can 165. On the exhaust gas inlet side of the can 165 is attached a current plate 161, which adjust the exhaust gas flow. In the exhaust gas purification apparatus shown in Fig. 16, the diesel oxidation catalyst 162 has unevenness on each of the two end faces so as to correspond with the diesel particulate filter 163 having unevenness on each of the two end faces; and the convex portion (right side in Fig. 16, exhaust gas outlet (downstream) side) of the diesel oxidation catalyst 162 is engaged with the concave portion (left side in Fig. 16, exhaust gas inlet (upstream) side) of the diesel particulate filter 163 to be compact in the longitudinal direction.

Next, a method for manufacturing a honeycomb structure of the present invention will be described. In order to manufacture a honeycomb structure of the present invention, a honeycomb structure having a segment structure or a honeycomb structure having no segment structure is manufactured by a known means (see, e.g., JP-A-2005-315141, JP-A-2003-024726, Japanese Patent No. 3816341, and Registered Utility Model No. 2577961). The honeycomb structure is subjected to machining such as grinding, polishing, and cutting, and then forming of unevenness on the two end faces with maintaining the length in the fluid flow direction the same. The convex portion is formed on one end face, and the concave portion having a space having a shape complementary with the convex shape is formed on the other face to maintain the length in the fluid flow direction the same.

In addition, a honeycomb structure of the present invention can be manufactured by manufacturing a honeycomb structure having a segment structure by a know means and, displacing honeycomb segments in the fluid flow direction when honeycomb segments are bonded together in the process.

Hereinbelow, a method for manufacturing a honeycomb structure of the present invention will be described with referring to a case of manufacturing a honeycomb structure having a segment structure. In manufacturing a honeycomb structure of the present invention, in the first place, kneaded clay is formed into a honeycomb shape to obtain a plurality of honeycomb segment formed articles. Kneaded clay having plasticity can be obtained by adding a binder such as methyl cellulose, hydroxypropoxyl cellulose, hydroxyethyl cellulose, carboxymethyl cellulose, and polyvinyl alcohol to a material such as silicon carbide, silicon-silicon carbide based composite material, silicon nitride, cordierite, mullite, alumina, spinel, silicon carbide-cordierite based composite material, lithium aluminum silicate, aluminum titanate, and a Fe-Cr-Al based metal; and further adding a surfactant and water or the like as a solvent to the mixture. As the means for forming the kneaded clay into a honeycomb shape, an extrusion forming method can be used.

Next, after drying the honeycomb segment formed articles with microwaves, hot air, or the like, they are fired to obtain a plurality of honeycomb segments (sintered articles). Then, the honeycomb segments are bonded together so as to have displacement to obtain a honeycomb segment bonded article. Specifically, slurry for a bonding material layer to form a bonding material layer is applied on the peripheral face (outer face of the outer wall layer, outer wall face) of the honeycomb segments, the honeycomb segments are combined so as to obtain a predetermined three-dimensional shape (the whole shape of a honeycomb structure of the present invention) where honeycomb segments have displacement, and they are subjected to pressure bonding in the combined state, followed by heat-drying. Thus, a honeycomb segment bonded article where a plurality of honeycomb segments are unitarily bonded with displacement is manufactured.

Suitable examples of the material for the bonding material layer (material for the slurry for the bonding material layer applied on the honeycomb segment) include a material containing inorganic fibers, an inorganic binder, an organic binder, and inorganic particles. Specifically, examples of the inorganic fibers include oxide fibers of aluminosilicate, alumina, and the like, and other fibers (e.g., SiC fibers). Examples of the inorganic binder include silica sol, alumina sol, and clay. Examples of the organic binder include polyvinyl alcohol, carboxymethyl cellulose, and methyl cellulose. Examples of the inorganic particles include ceramics such as silicon carbide, silicon nitride, cordierite, alumina, and mullite.

Next, after the honeycomb segments bonded article is subjected to grinding to have a predetermined shape as necessary, the peripheral face is covered with an outer peripheral layer to obtain a honeycomb structure having a segment structure. Specifically, slurry for the outer peripheral layer to form the outer peripheral layer is applied on the peripheral face of the honeycomb segment bonded article to have a final outer peripheral layer thickness of, for example, 0.1 to 1.5 mm, and it is dried and hardened by a heat treatment to cover the peripheral face of the honeycomb segment bonded article with the outer peripheral layer.

Incidentally, by decreasing the outer diameter of the outer peripheral portion on the side where the end face has a concave portion (depression), bending moment to the bonded portion upon canning can be relaxed, which is preferable. In this case, it is preferable that the area having a smaller outer diameter is present up to the depth of the depression. The diameter is desirably smaller by 0.1 to 4 mm. When the difference is below 0.1 mm, the effect in reducing the size cannot be obtained because the outer diameter is increased by thermal expansion at high temperature. When it is above 4 mm, a gap from the inner diameter of the can is large to allow PM (soot) to deposit there or to allow the mat to come apart or to be ground, which is not preferable. The depth of the depression can be made small by grinding or the like.

Finally, the cells are plugged. As the plugging material used for plugging, the same material as that for a honeycomb structure (partition walls) of the present invention can be used. The plugging can be performed by immersing an end face of a honeycomb structure of the present invention in plugging slurry containing the plugging material in a state that the cells to be unplugged are masked to fill the plugging slurry into the open cells. Incidentally, the filling of the plugging slurry may be performed after forming and before firing of the honeycomb segment formed article. When it is performed before firing, the firing step can be decreased.

### Example

Hereinbelow, the present invention will be described more specifically with Examples. However, the present invention is by no means limited to these Examples.

(Example 1) A honeycomb structure having a segment structure shown in Figs. 9A to 9C (random type) was manufactured, and the regeneration test was performed to measure the maximum temperature during regeneration.

[Honeycomb structure] The main material of the honeycomb structure was silicon carbide. The partition walls of the honeycomb structure had a porosity of 52%, a mean pore diameter of 15 µm, and a thickness of 0.3 mm; and the honeycomb structure has a cell density of 300 cpsi. The honeycomb segments each had a size of 35 mm square, were combined to be 5 × 5 by means of a bonding material, and were displaced in the fluid flow direction at that time to have a total displacement amount dT of 50 mm. Incidentally, the entire length was 200 mm. In addition, the peripheral face was ground to give an almost circular columnar shape except the end faces. The outer diameter was 172 mm.

[Regeneration test] A ceramic non-expansion mat was wrapped around the honeycomb structure on the outer peripheral face, and the honeycomb structure was pressed into a can made of SUS409 to have a canned structure. Then, combustion gas containing soot generated by combustion of diesel fuel light oil was allowed to flow in from the inlet end face of the catalyst-loaded honeycomb structure and flow out from the outlet end face to deposit the soot on the catalyst-loaded honeycomb structure by trapping. Then, after cooling down to room temperature, combustion gas containing oxygen at a certain proportion at 630°C was allowed to flow in from the inlet end face of the catalyst-loaded honeycomb structure to perform the regeneration test for combusting and removing soot, and the maximum temperature during the regeneration (combustion) was measured by a thermocouple set in the center of each of the segment and 15 mm apart from the outlet. The soot deposition amount was made to be 10 g/l (liter). The results are shown in Table 1.

**Table 1**

| | Type | Fig. | Total displacement amount dT [mm] | Maximum temperature, during regeneration [°C] |
|---|---|---|---|---|
| Comp. Ex. 1 | Flat end face | Fig. 17 | 0 | 900 |
| Comp. Ex. 2 | Depressed center | Fig. 18 | 50 | 880 |
| Comp. Ex. 3 | Protruding center | Fig. 19 | 50 | 920 |
| Example 1 | Random | Figs. 9A, 9B, 9C | 50 | 790 |
| Example 2 | Protruding outlet center | Figs. 10A, 10B, 10C | 50 | 740 |
| Example 3 | Doughnut | Figs. 7A, 7B, 7C | 50 | 750 |
| Example 4 | Doughnut protrusion & depression | Figs. 8A, 8B 8C | 50 | 700 |
| Example 5 | Continuously protruding outlet center | Fig. 6 | 50 | 820 |

(Examples 2 to 5, Comparative Examples 1 to 3) Honeycomb structures each having a segment structure were manufactured in the same manner as in Example 1 except that the honeycomb structure type was changed to perform the regeneration test, and the maximum temperature during regeneration was measured. The results are shown in Table 1.

(Examples 6 to 10) Honeycomb structures each having a segment structure shown in Figs. 10A to 10C (protruding outlet center type) were manufactured, and, at that time, the displacement amount d1 between two adjacent honeycomb segments 2 and the displacement amount from the plugging were varied besides the total displacement amount dT. The regeneration test was performed in the same manner as in Example 2 except that the displacement amounts were varied to measure the maximum temperature during regeneration. The results are shown in Table 2 together with the corresponding results of Comparative Example 1.

**Table 2**

| | Type | Fig. | Total displacement amount dT [mm] | Total displacement dT/ amount Whole length [%] | Displacement amount from plugging [mm] | Displacement amount d1 [mm] | Displacement amount d1/ Whole length [%] | Maximum temperature during regeneration [°C] |
|---|---|---|---|---|---|---|---|---|
| Comp. Ex. 1 | Flat end face | Fig. 17 | 0 | 0 | -10 | 0 | 0 | 900 |
| Example 6 | Protruding outlet center | Figs. 10A, 10B, 10C | 8 | 5 | -2 | 2.5 | 2 | 860 |
| Example 7 | Protruding outlet center | Figs. 10A, 10B, 10C | 15 | 10 | +5 | 7.5 | 5 | 800 |
| Example 8 | Protruding outlet center | Figs. 10A, 10B, 10C | 30 | 20 | +20 | 15 | 10 | 770 |
| Example 9 | Protruding outlet center | Figs. 10A, 10B, 10C | 50 | 33 | +40 | 25 | 17 | 740 |
| Example 10 | Protruding outlet center | Figs. 10A, 10B, 10C | 100 | 66 | +90 | 50 | 33 | 700 |

(Example 11) As the honeycomb segment, not the honeycomb segment 2 shown in Fig. 20B (the cells having a single square cross section), but a honeycomb segment where square cells and octagonal cells having a larger opening area than that of the square cells are alternately disposed in two directions perpendicular to each other on each of the end faces was used (see Figs. 21A and 21B). The square cells were plugged with a plugging material on the combustion gas inlet side end face upon a regeneration test, and the octagonal cells are plugged with a plugging material on the outlet side end face. Then, a honeycomb structure (protruding outlet center type) of a segment structure shown in Figs. 10A to 10C in the same manner as in Example 2 except that the honeycomb segment is changed, and the total displacement amount dT was made to be 50 mm. Then, the regeneration test was performed in the same manner as in Example 2 to measure the maximum temperature during regeneration and the pressure at the inlet and the outlet of the can during regeneration to obtain pressure loss. The results are shown in Table 3 together with the corresponding results of Comparative Example 1. Incidentally, the pressure loss is a relative value when the result of the Example 11 is regarded as 100.

**Table 3**

| | Cell cross sectional shape | Pressure loss | Maximum temperature during regeneration [°C] |
|---|---|---|---|
| Comp. Ex. 1 | Square (single) | 130 | 900 |
| Example 11 | Square and octagon | 100 | 780 |

(Discussion) From the results shown in Tables 1 to 3, it can be understood that temperature during regeneration can be lowered according to a honeycomb structure of the present invention.

A honeycomb structure of the present invention can suitably be used for trapping and removing particulate matter contained in exhaust gas discharged from automobile engines, construction machine engines, industrial stationary engines, burning appliances, and the like.

## Claims

1. A honeycomb structure provided with a plurality of cells separated by a plurality of partition walls and functioning as fluid passages, wherein the cells have the same entire length, and at least two of the cells mutually have displacement in a fluid flow direction, and wherein each of predetermined cells among the cells is plugged with a plugging material filled in the cells on an end portion on one side, and each of the other cells is plugged with a plugging material filled in the cells on the end portion on the other side oppositely to the predetermined cells.

2. A honeycomb structure according to Claim 1, wherein all the cells mutually have displacement in the fluid flow direction.

3. A honeycomb structure according to Claim 1 or 2, wherein the entire length of the cells is 150 mm or more.

4. A honeycomb structure according to any one of Claims 1 to 3, wherein the mean pore diameter of the partition walls is 5 to 40 µm.

5. A honeycomb structure according to any one of Claims 1 to 4, wherein a difference in the entire length of the cells is not larger than the length of the plugging material.

6. A honeycomb structure according to any one of Claims 1 to 5, wherein a total displacement amount which is the maximum displacement amount between any two cells is not smaller than the length of the plugging material.

7. A honeycomb structure according to any one of Claims 1 to 6, wherein two adjacent cells mutually have displacement in the fluid flow direction, and the displacement amount between two adjacent cells is not smaller than the length of the plugging material.

8. A honeycomb structure according to any one of Claims 1 to 7, wherein a total area A (mm²) of the cross sections perpendicular to a longitudinal direction of the predetermined cells each plugged in the one end portion on the one side and a total area B (mm²) of the cross sections perpendicular to the longitudinal direction of the other cells plugged in the end portion on the other side satisfy the relation of A<B.

9. A honeycomb structure according to any one of Claims 1 to 8, wherein the shape of the cross section perpendicular to the longitudinal direction of the predetermined cells each plugged in the one end portion on the one side and the shape of the cross section perpendicular to the longitudinal direction of the other cells each plugged in the end portion on the other side are different.

10. A honeycomb structure according to any one of Claims 1 to 9, wherein the partition walls comprise a porous partition wall matrix and a surface layer provided on only the fluid inflow side or on both the fluid inflow side and the fluid outflow side of the partition wall matrix.

11. A honeycomb structure according to any one of Claims 1 to 10, wherein a plurality of segments are unitarily bonded by means of a bonding material to have a segment structure, the entire length of the segments is almost the same, and at least two of the segments mutually have displacement in a fluid flow direction.

12. A diesel particulate filter having a honeycomb structure according to any one of Claims 1 to 11.

13. A catalyst carrier obtained by loading a catalyst on a honeycomb structure according to any one of Claims 1 to 11.

14. A converter obtained by canning a honeycomb structure according to any one of Claims 1 to 11 with attaching a sensor thereto.

## Patentansprüche

1. Wabenstruktur, bereitgestellt mit einer Vielzahl von Zellen, die durch eine Vielzahl von Trennwänden voneinander getrennt sind und als Fluiddurchlässe fungieren, wobei die Zellen dieselbe Gesamtlänge aufweisen und zumindest zwei der Zellen in eine Fluidströmungsrichtung gegeneinander versetzt sind, und wobei jede von vorbestimmten Zellen der Zellen mit einem Verschlussmaterial verschlossen ist, mit dem die Zellen in einem Endabschnitt auf einer Seite befüllt sind, und wobei jede der anderen Zellen mit einem Verschlussmaterial verschlossen ist, mit dem die Zellen im Endabschnitt auf der anderen Seite entgegengesetzt zu den vorbestimmten Zellen befüllt sind.

2. Wabenstruktur nach Anspruch 1, wobei alle Zellen in eine Fluidströmungsrichtung gegeneinander versetzt sind.

3. Wabenstruktur nach Anspruch 1 oder 2, wobei die Gesamtlänge der Zellen 150 mm oder mehr beträgt.

4. Wabenstruktur nach einem der Ansprüche 1 bis 3, wobei der durchschnittliche Porendurchmesser der Trennwände 5 bis 40 µm beträgt.

5. Wabenstruktur nach einem der Ansprüche 1 bis 4, wobei die Differenz in der Gesamtlänge der Zellen nicht größer als die Länge des Verschlussmaterials ist.

6. Wabenstruktur nach einem der Ansprüche 1 bis 5, wobei ein Gesamtversetzungsausmaß, das das maximale Versetzungsausmaß zwischen zwei beliebigen Zellen ist, nicht kleiner als die Länge des Verschlussmaterials ist.

7. Wabenstruktur nach einem der Ansprüche 1 bis 6, wobei zwei benachbarte Zellen gemeinsam in Fluidströmungsrichtung gegeneinander versetzt sind und das Versetzungsausmaß zwischen zwei benachbarten Zellen nicht kleiner ist als die Länge des Verschlussmaterials.

8. Wabenstruktur nach einem der Ansprüche 1 bis 7, wobei eine Gesamtfläche A (mm²) der Querschnitte senkrecht auf eine Längsrichtung der vorbestimmten Zellen, die jeweils in dem einen Endabschnitt auf der einen Seite verschlossen sind, und eine Gesamtfläche B (mm²) der Querschnitte senkrecht auf die Längsrichtung der anderen Zellen, die im Endabschnitt auf der anderen Seite verschlossen sind, die Beziehung A<B erfüllen.

9. Wabenstruktur nach einem der Ansprüche 1 bis 8, wobei die Form des Querschnitts senkrecht auf die Längsrichtung der vorbestimmten Zellen, die jeweils in dem einen Endabschnitt auf der einen Seite verschlossen sind, und die Form des Querschnitts senkrecht auf die Längsrichtung der anderen Zellen, die im Endabschnitt auf der anderen Seite verschlossen sind, sich voneinander unterscheiden.

10. Wabenstruktur nach einem der Ansprüche 1 bis 9, wobei die Trennwände eine poröse Trennwandanordnung und eine Oberflächenschicht umfassen, die nur auf der Fluideinströmungsseite oder sowohl der Fluideinströmungsseite und der Fluidausströmungsseite der Trennwandanordnung bereitgestellt ist.

11. Wabenstruktur nach einem der Ansprüche 1 bis 10, wobei eine Vielzahl von Segmenten durch ein Haftmaterial einseitig haftschlüssig verbunden sind, um eine Segmentstruktur aufzuweisen, die Gesamtlänge der Segmente beinahe gleich ist und zumindest zwei der Segmente in eine Fluidströmungsrichtung gegeneinander versetzt sind.

12. Dieselteilchenfilter mit einer Wabenstruktur nach einem der Ansprüche 1 bis 11.

13. Katalysatorträger, erhalten durch Beladen eines Katalysators auf eine Wabenstruktur nach einem der Ansprüche 1 bis 11.

14. Konverter, erhalten durch Einhausen einer Wabenstruktur nach einem der Ansprüche 1 bis 11 durch Befestigen eines Sensors auf dieser.

## Revendications

1. Structure en nid d'abeilles munie d'une pluralité d'alvéoles séparées par une pluralité de parois de séparation et fonctionnant comme passages de fluide, où les alvéoles ont la même longueur entière, et au moins deux des alvéoles ont mutuellement un déplacement dans une direction d'écoulement du fluide, et dans laquelle chacune des alvéoles prédéterminées parmi les alvéoles est bouchée avec un matériau de bouchage introduit dans les alvéoles sur une portion d'extrémité sur un côté, et chacune des autres alvéoles est bouchée avec un matériau de bouchage introduit dans les alvéoles sur la portion d'extrémité sur l'autre côté opposé aux alvéoles prédéterminées.

2. Structure en nid d'abeilles selon la revendication 1, dans laquelle toutes les alvéoles ont mutuellement un déplacement dans la direction d'écoulement du fluide.

3. Structure en nid d'abeilles selon la revendication 1 ou 2, dans laquelle la longueur entière des alvéoles est de 150 mm ou plus.

4. Structure en nid d'abeilles selon l'une quelconque des revendications 1 à 3, dans laquelle le diamètre moyen de pore des parois de séparation est de 5 à 40 µm.

5. Structure en nid d'abeilles selon l'une quelconque des revendications 1 à 4, dans laquelle une différence dans la longueur entière des alvéoles n'est pas plus grande que la longueur du matériau de bouchage.

6. Structure en nid d'abeilles selon l'une quelconque des revendications 1 à 5, dans laquelle une quantité de déplacement totale, qui est la quantité de déplacement maximum entre deux alvéoles, n'est pas plus petite que la longueur du matériau de bouchage.

7. Structure en nid d'abeilles selon l'une quelconque des revendications 1 à 6, dans laquelle deux alvéoles adjacentes ont mutuellement un déplacement dans la direction d'écoulement du fluide, et la quantité de déplacement entre deux alvéoles adjacentes n'est pas plus petite que la longueur du matériau de bouchage.

8. Structure en nid d'abeilles selon l'une quelconque des revendications 1 à 7, dans laquelle une aire totale A (mm²) des sections transversales perpendiculaires à une direction longitudinale des alvéoles prédéterminées, chacune bouchée dans une portion d'extrémité précitée sur un côté précité, et une aire totale B (mm²) des sections transversales perpendiculaires à la direction longitudinale des autres alvéoles bouchées dans la portion d'extrémité sur l'autre côté satisfont à la relation de A<B.

9. Structure en nid d'abeilles selon l'une quelconque des revendications 1 à 8, dans laquelle la forme de la section transversale perpendiculaire à la direction longitudinale des alvéoles prédéterminées, chacune bouchée dans une portion d'extrémité précitée sur un côté précité et la forme de la section transversale perpendiculaire à la direction longitudinale des autres alvéoles, chacune bouchée dans la portion d'extrémité sur l'autre côté, sont différentes.

10. Structure en nid d'abeilles selon l'une quelconque des revendications 1 à 9, dans laquelle les parois de séparation comprennent une matrice de paroi de séparation poreuse et une couche de surface réalisée seulement sur le côté d'afflux du fluide ou à la fois sur le côté d'afflux du fluide et le côté d'écoulement du fluide de la matrice de paroi de séparation.

11. Structure en nid d'abeilles selon l'une quelconque des revendications 1 à 10, dans laquelle plusieurs segments sont liés unitairement par un matériau de liaison pour avoir une structure segmentaire, la longueur entière des segments étant presque la même, et au moins deux des segments ont mutuellement un déplacement dans une direction d'écoulement du fluide.

12. Filtre particulaire de Diesel ayant une structure en nid d'abeilles selon l'une quelconque des revendications 1 à 11.

13. Support de catalyseur obtenu en chargeant un catalyseur sur une structure en nid d'abeilles selon l'une quelconque des revendications 1 à 11.

14. Convertisseur obtenu par la mise en boîte d'une structure en nid d'abeilles selon l'une quelconque des revendications 1 à 11 en fixant un capteur à celui-ci.
